(19) Europäisches Patentamt

European Patent Office

Office européen des brevets

(11) EP 1 116 950 A1

(12) EUROPEAN PATENT APPLICATION

(43) Date of publication:
18.07.2001 Bulletin 2001/29

(51) Int Cl.⁷: **G01N 21/956**, G01N 21/88, G01R 31/309

(21) Application number: 01300376.9

(22) Date of filing: 17.01.2001

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **17.01.2000 SG 2000258**<br><br>(71) Applicant: **Agilent Technologies, Inc.**<br>**Palo Alto, CA 94306 (US)** | (72) Inventor: **Toh, Peng-Seng**<br>**Singapore 288407 (SG)**<br><br>(74) Representative: **Powell, Stephen David et al**<br>**WILLIAMS, POWELL & ASSOCIATES**<br>**4 St Paul's Churchyard**<br>**London EC4M 8AY (GB)** |

(54) **Method and apparatus for inspecting a printed circuit board assembly**

(57) An apparatus 200 for inspecting a printed circuit board assembly 100 comprising a set of components 110 mounted on a circuit board 120 with solder joints, comprises imaging means 240 for imaging along an optical axis so as to receive light reflected from surfaces of a component, coaxial light projecting means 210 for projecting light onto surfaces of the component in a direction substantially parallel with the optical axis of the imaging means, and oblique light projecting means 220, 230 for projecting light onto surfaces of the component in an oblique direction relative to the optical axis of the imaging means.

Figure 1

## Description

This invention relates to a method of and apparatus for inspecting a printed circuit board assembly.

In general, printed circuit board assemblies (PCBA) comprise a set of components mounted on a circuit board. Each component typically includes one or more solder joints for mounting and electrically connecting the component to the circuit board.

PCBA inspection apparatus enables a variety of features of a PCBA to be inspected including, for example, the quality of solder joints and the placement and different features of the components. During inspection of solder joints, defects can be detected and categorised into defect types, such as: i) solder bridging or shorting, ii) no solder, iii) insufficient solder, iv) de-wetted solder, v) void in solder, vi) excessive solder, and vii) tombstoning. The types of defects which can occur in the placement and with regard to the features of components include amongst others: i) wrong orientation or polarity of the component, ii) misalignment of the component, iii) missing component, iv) incorrect component type, v) wrong component value, vi) wrong component marking, and vii) inverted component.

There are major differences between the visual appearance of solder joints and the visual appearance of components. Typically, solder joints are highly reflective (shiny) and posses certain distinguishable three-dimensional shapes, whereas components are characterised by large variations in colour, surface texture, shape, and height. Components also tend to include identification markings which can vary widely to represent features such as polarity, orientation, value, part number and so on. Some polarity identifications are represented by a colour, a bar, a dimple, or by characters. Laser marking is an increasingly popular method of generating identification markings on components. However, problems are created in the detection of laser markings due to their lower visual contrast relative to conventional ink marking.

Due to these differing characteristics, prior art inspection devices are generally designed to exclusively inspect either solder joints or the features/placement of components.

There are several prior art patent publications concerned with methods or apparatus for inspecting solder joints. Examples include scanning methods that use a scanning laser beam to measure the height profile of the solder joints, and shape-from-structured light methods that use a sheet-of-light to cast a line on the solder joint and the bare board. In the shape-from-structure light methods, the reflected line is analysed and the three dimensional shape of the solder joint is computed. These techniques are slow and cannot be used to inspect most types of component feature/placement defects such as wrong value or wrong part.

US Patent 5,064,291, "Method and apparatus for inspection of solder joints utilising shape determination from shading," assigned to Hughes Aircraft Company describes a two light source method with a single camera. A solder joint is sequentially illuminated from first and second oblique angles. Optically scanned and reflected light intensity values at incremental values of inclination are then measured. The method is applicable to solder joint inspection.

US Patent 5,039,868, "Method and apparatus for inspecting printed circuit boards and the like," assigned to Omron Corporation, discloses a substrate inspection apparatus. The apparatus comprises a plurality of ring-shaped sources for directing light of different hues to circuit board components at different angles of incidence. Imaging is performed using a colour camera that receives reflected light from the surfaces of object under inspection.

US Patent 5,822,449 and EP 0 685 732 A1, also assigned to Omron Corporation, relate to developments of the fundamental techniques disclosed in US Patent 5,039,868.

Techniques similar to those described in the foregoing Omron Corporation patents are described in *IEEE Transactions on Pattern Analysis and Machine Intelligence,* Vol. 10, No 3, May 1988, Capson, D.W. and S.K. Eng, "A tiered-color illumination approach for machine inspection of solder joints", pp. 387-393.

US Patent 5,517,235 assigned to Control Automation, Inc describes a method and apparatus for inspecting a printed circuit board at different magnifications. US Patents 5,260,779 and 5,245,421, also assigned to Control Automation, Inc, describe a method and apparatus for inspecting a printed circuit board using a dome-shaped array of LED lamps. LED illumination is generally of low brightness and monochromatic in nature. The control of a large array of LED lamps also makes the system difficult to use and consistent result may not be obtained.

The BV 3000 inspection device previously available from Hewlett Packard Company, California is designed to inspect the positions of components.

The applicant has recognised the importance of having an automated inspection system capable of inspecting both solder joint defects and component feature/placement defects since both these categories of defect affect the performance and reliability of a PCBA.

According to a first aspect of the invention there is provided an apparatus for inspecting a printed circuit board assembly, the assembly including a component mounted on a circuit board by at least one soldered portion, comprising: imaging means for imaging along an optical axis so as to receive light reflected from surfaces of the assembly which surfaces are within the field of view of the imaging means, coaxial light projecting means for projecting light onto the surfaces of the assembly in a direction parallel, including coaxial, with the optical axis of the imaging means, and oblique light projecting means for projecting light onto the surfaces of the assembly in an oblique direction relative to the optical axis of the imaging means.

In a preferred embodiment of the invention, the apparatus further comprises processing means for processing images received from the imaging means to provide information on the shape of the soldered portion based on light projected from the oblique light projecting means and reflected from said surfaces of the soldered portion, and to provide information on features, like the position of the component on the circuit board based on light projected from the coaxial light projecting means and reflected from said surfaces of the component. The processing means may also process images received from the imaging means to determine additional information on the shape of the soldered portion based on light projected from the coaxial light projecting means and reflected from said surfaces of the soldered portion. Furthermore, the processing means may include comparing means to compare the image received from the imaging means with predetermined images.

An apparatus for inspecting a printed circuit board assembly in accordance with the invention has the advantage that various features of the PCBA, in particular features of the component and solder joints, like the position of the component and the shape of the solder portion of the component may be determined using a single apparatus, specifically a single imaging means. The information of the position of the component enables accurate determination of the position of the solder portion of the component. The position of the solder portion may then be used to more accurately analyse the information of the shape of the soldered portion, which in turn enables the shape of the solder portion to be determined more accurately.

In a preferred embodiment of the invention, the coaxial light projecting means includes a reflector disposed so as to reflect light from a light source in a direction at least substantially parallel, including coaxial, with the optical axis of the imaging means. Preferably, light reflected from surfaces of the PCBA (e.g. components, solder joints) passes through the reflector for imaging by the imaging means. Further preferably, the reflector is a beam splitter positioned in-between the imaging Means and the PCBA under inspection. The beam splitter enables light to be reflected towards the PBCA in a direction that is coaxial with the optical axis of the imaging means. Coaxial light in the context of the present invention and the relevant art may be interpreted as light that appears to be emitted by the imaging means. The use of coaxial light has the advantage of providing high contrast reflective images of the circuit board and the components mounted thereon.

Preferably, the oblique light projecting means include at least one low-incidence light source disposed so as to project light at a predetermined small angle relative to the optical axis of the imaging means, and at least one high-incidence light source disposed so as to project light at a relatively larger predetermined angle relative to the optical axis of the imaging means.

The use of low-incidence and high-incidence light sources has the advantage of providing imaging information concerning the profile of the solder portion of the component.

The imaging means may generate image information for discriminating between light from the coaxial light projecting means and light from the oblique light projecting means.

The coaxial light projecting means and the oblique light projecting means preferably project light of different colours, and the imaging means generates colour image information for discriminating between the light from the coaxial light projecting means and light from the oblique light projecting means. Discrimination may be possible even though the different colours have some frequency overlap.

Preferably, the imaging means includes a colour camera which is located above the printed circuit board assembly and which generates colour image signals for discriminating between light from the coaxial light projecting means and light from the oblique light projecting means.

The processing means may alternatively process images received from the imaging means to determine the shape of the soldered portion based on light from the oblique light projecting means, and to determine the identity of the soldered portion based on light from the coaxial light projecting means.

According to a second aspect of the present invention, there is provided an apparatus for inspecting a printed circuit board assembly, the assembly including a component mounted on a circuit board by at least one soldered portion, comprising: coaxial light projecting means for projecting light onto surfaces of the component along an optical axis, oblique light projecting means for projecting light onto the surfaces of the assembly in an oblique direction relative to the optical axis, and imaging means for imaging along the optical axis so as to receive light reflected from surfaces of the component.

According to a third aspect of the present invention, there is provided a method of inspecting a printed circuit board assembly, the assembly including a component mounted on a circuit board by at least one soldered portion, comprising: imaging along an optical axis so as to receive light reflected from surfaces of the assembly, projecting light onto said surfaces of the assembly in a direction at least substantially parallel, including coaxial, with the optical axis of the imaging means, projecting light onto said surfaces of the assembly in at least one oblique direction relative to the optical axis of the imaging means, and processing images received in the imaging step to provide information on the shape of the soldered portion based on light projected from the oblique light projecting means and reflected from said surfaces of the soldered portion, and to provide information on features, like the position of the component on the circuit board based on light projected from the coaxial light projecting means and reflected from said surfaces of the component.

A preferred embodiment of the invention may provide a flexible and yet robust lighting to illuminate PCBAs and produce images that are easily analysed for defects. The embodiment may enable surface mount components, through-hole components and odd form components together with solder joints to be inspected. It is further provided that the embodiment may be able to inspect even low contrast laser marks on a component for wrong part, value, orientation, polarity and poor mark quality; shadow dimples or notches on components; scratches on pads or other critical component surfaces.

Apparatus in accordance with the present invention may have one or more of the following technical features:

1. At least two different types of structured light including a co-axial lighting and at least one oblique lighting may be used. Preferably three different types of structured light are used, wherein a co-axial lighting is provided and the oblique lighting is embodied by a low-incidence lighting and a high-incidence lighting.

2. The three different types of structured light may be applied in many different combinations. Simultaneous applications of the lighting may be made possible by the use of coloured light and colour imaging.

3. The three different structured lights may originate from a single common intensely bright white light source.

4. The combined intensity of the illuminating light may be at least 10 times higher than the immediate ambient lighting condition to ensure good immunity to ambient light fluctuation. The intensely bright illumination may also allow the aperture of the imaging system lens to be stepped down (smaller diameter of opening) to increase the depth of field of the imaging system.

5. A colour video camera may be used for image acquisition.

6. Low-incidence lighting can provide uniform illumination for general applications such as identification and inspection of chip terminals (electrodes), normal marks, capacitor polarities etc.

7. High-incidence lighting can illuminate components at a glazing angle and has the advantage of highlighting surface blemishes / defects and laser markings.

8. Co-axial lighting can highlight surfaces that are flat and largely perpendicular to the imaging optical axis. This lighting can bring out the contrast of the outline of devices, and can produce images with bright portions corresponding to flat and smooth objects with surfaces running at least substantially perpendicular to the imaging optical axis and with dark portions corresponding to rough surfaces or surfaces which are not perpendicular to the optical axis. Laser mark contrast can be enhanced with co-axial lighting.

9. The combination of images produced preferably by all three lightings, i.e. by co-axial lighting, high-incidence lighting and low-incidence lighting provides full information for inspecting solder joints. Solder joint defects such as no solder, insufficient solder, excessive solder, de-wetted (negative) solder, and tombstoning, as well as the location of the defects can be determined from the relative positions of the co-axial lighting, high-incidence lighting and low-incidence lighting reflections producing said images.

10. The use of a colour beam splitter to split the white light source into three different colour channels that match the colour video camera for the three lightings enables the different colour bands to be separated effectively.

11. The use of a single common white light source enables the intensity (brightness) of the three different channels (colour bands) to be evenly distributed. After splitting the white light into three channels, the intensity of each of the channel may still be greater than monochromatic light sources such as LEDs.

12. A colour video camera may be arranged above the printed circuit board assembly such that its optical axis is at least largely perpendicular to the plane of the printed circuit board assembly.

13. The colour video camera may generate three separate channels of video signal with each digitised for processing by a processing means.

14. The colour video camera may preferably be equipped with a zoom mechanism to capture images with different magnifications.

15. Supporting and transportation means may be used to support and to move the PCBA so that different parts of the PCBA can be positioned for imaging and inspection.

Embodiments of the invention will now be described, by way of example, with reference to the accompanying drawings, in which:

Figure 1 is a schematic diagram showing the overall architecture of a printed circuit board assembly inspection apparatus in accordance with the invention, including three colour light sources and a colour camera;

Figures 2a, 2b, 2c and 2d are schematic diagrams showing an assembly of two colour beam splitters and a white light source arranged in four different configurations to supply light with different wavelengths for the colour light sources of the apparatus of Figure 1;

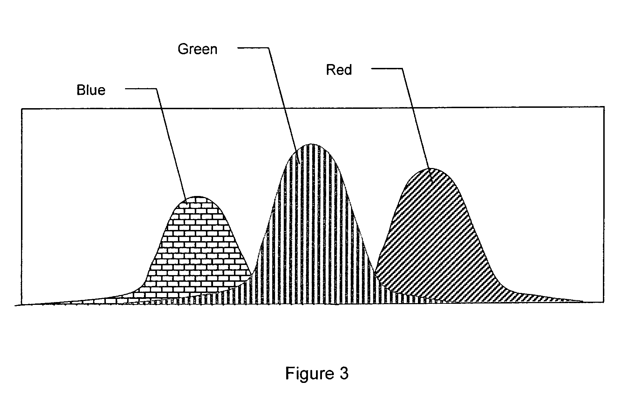

Figure 3 is a graph showing the spectral distribution of the three major colour components (red, green and blue) generated from the single white light source of Figure 2;

Figure 4 is a cross-sectional side view of a component showing co-axial light reflected from an unmarked and a laser marked portion of the component surface; Figure 5 is a cross-sectional side view of a component showing co-axial light reflected from a smooth and a scratched portion of the component surface;

Figure 6 is a side and a plan view of a small outline transistor (SOT) component showing co-axial light reflected from a top surface and a side bevelled surface of the SOT;

Figure 7a is a side view of a correctly mounted chip component showing co-axial light reflected from top surfaces of the component;

Figure 7b is a side view of an incorrectly mounted (tombstoned) chip component showing co-axial light reflected from top surfaces of the component;

Figures 8a and 8b are graphs showing the relationship between the geometry of the solder joint and the incident and reflected light;

Figure 9 is a side profile view of an ideal solder joint and the edge of a component, three graphs showing the intensity of low-incidence light, high-incidence light and co-axial light reflected from the solder joint in the imaging direction, and a view representing a two-dimensional colour image of the solder joint and component edge produced by the camera of Figure 1;

Figure 10 is a side profile view of a non-ideal solder joint with excessive solder and the edge of a component, three graphs showing the intensity of low-incidence light, high-incidence light and co-axial light reflected from the solder joint in the imaging direction, and a view representing a two-dimensional colour image of the solder joint and component edge produced by the camera of Figure 1;

Figure 11 is a side profile view of a non-ideal solder joint with insufficient solder and the edge of a component, three graphs showing the intensity of low-incidence light, high-incidence light and co-axial light reflected from the solder joint in the imaging direction, and a view representing a two-dimensional colour image of the solder joint and component edge produced by the camera of Figure 1;

Figure 12 is a side profile view of a dewetted or negative solder joint and the edge of a component, three graphs showing the intensity of low-incidence light, high-incidence light and co-axial light reflected from the solder joint in the imaging direction, and a view representing a two-dimensional colour image of the solder joint and component edge produced by the camera of Figure 1; and

Figure 13 is a side profile view of a solder joint without a component, three graphs showing the intensity of low-incidence light, high-incidence light and co-axial light reflected from the solder joint in the imaging direction, and a view representing a two-dimensional colour image of the solder joint produced by the camera of Figure 1.

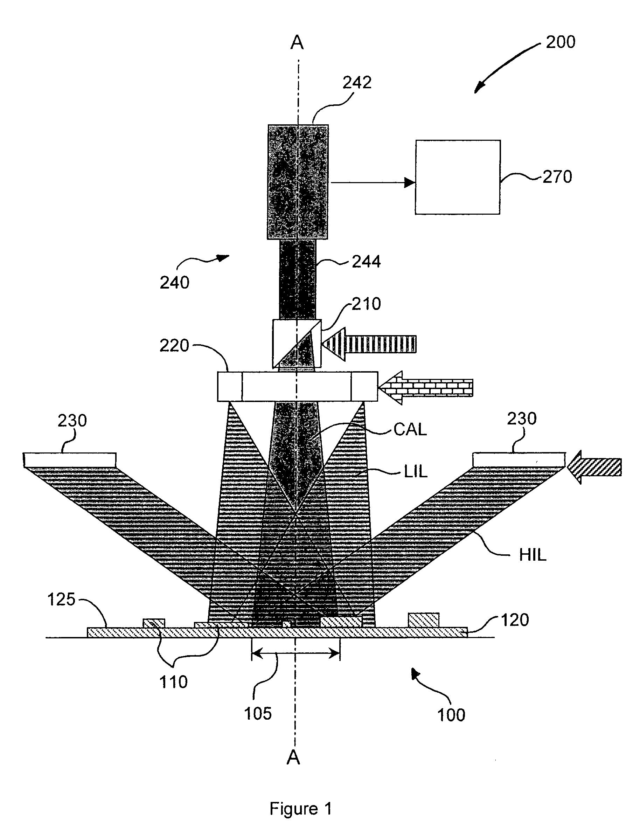

The present invention will be described with reference to a preferred inspection apparatus illustrated schematically in Figure 1.

Referring to Figure 1, there is shown an inspection apparatus 200 according to a preferred embodiment of the invention which generally comprises three light projecting devices 210, 220, 230, an imaging device 240 and a base element 300 for supporting and transporting a printed circuit board assembly (PCBA) 100 to be inspected by the inspection apparatus 200.

As shown in Figure 1, the printed circuit board assembly 100 arranged on the base element 300 may include a set of components 110 mounted on a planar upper surface 125 of a bare circuit board 120 by soldered portions or joints (not shown). The inspection apparatus 200 according to the invention is designed such as to be capable of inspection of said components 110, soldered portions or joints and other features of the PCBA 100.

The imaging device 240 comprises a colour video camera 242 fitted with a zoom lens 244, and is positioned in a certain distance directly above the base element 300. The design and the orientation of the base element 300 relative to the imaging device 240 is such that the upper surface 125 of the PCBA 100, when arranged on and supported by the base element 300, is faced by the zoom lens 244 of the video camera 242 and imaged by this latter along an optical axis A-A which is at least substantially perpendicular to the plane of the upper surface 125 of the PCBA 100. Further, Figure 1 shows the field of view inspection area 105 on the PCBA 100 that can be captured by the imaging device 240.

The base element is slideable in a plane perpendicular to the optical axis so that the entire PCBA 100 arranged thereon can subsequently be illuminated and scanned in the field of view area 105 by the light projecting devices 210, 220 and 230 and the inspection apparatus 200, respectively. Alternatively, for the same purposes, a separate transport mechanism for moving the PCBA 100 on the base element 300 may be provided.

Preferably, the colour video camera 242 is of the charge coupled device (CCD) image sensor type. The colour video camera 242 also comprises a colour beam splitter to split light received by the imaging device into the three primary colour components (red, green and blue). Three separate image sensors within the colour video camera 242 capture the respective coloured images. The colour video camera 242 outputs a colour video signal to a digitizer of the inspection apparatus 200 that converts the analogue signal into digital form. The digitizer is also commonly known as an analog-to-digital converter (ADC) or frame-grabber. The inspection apparatus 200 further comprises a processor 270 coupled to the digitizer. The digital video signal output by the digitizer can be readily processed and analysed by the processor 270 which may be implemented by a personal computer (PC) or a workstation. The zoom lens 244 is used in conjunction with the colour video camera 242 for varying the magnification factor as required. The optical axis A-A of the colour video camera 242 and the zoom lens 244 is determined so as to be perpendicular to the surface of the PCBA 100 when supported by the base element 300. The zoom lens 244 is preferably the type that when the magnification is changed, no re-focusing is required hence maintaining a constant object distance. According to the preferred embodiment of the invention, the three light projecting devices are embodied by a co-axial light (CAL) projector 210, a low-incidence light (LIL) projector 220, and a high-incidence light (HIL) projector 230. The co-axial light projector 210 comprises a beam splitter positioned in the optical axis A-A of the imaging device 240 between the zoom lens 244 of the imaging device 240 and the base element 300. The beam splitter acts to reflect light from a light source in the direction of and parallel, including coaxial, with the optical axis. As such, the co-axial light emitted by the co-axial light projector 210 appears as though it is emitted by the imaging device 240.

As shown in Figure 1, the low incidence light projector 220 is preferably a fibre-optic ring-shaped lighting device positioned above the base element 300 such that the geometrical axis of the device coincides with the optical axis of the imaging device 240. The diameter, the position and the light exit of the ring-shaped lighting device are selected such that the light emitted by the device is incident, at least in the in the field of view inspection area 105 of the inspection apparatus 200, on the upper surface 125 of the PCBA 100 arranged on the base element 300 at an oblique angle of around 15 to 20 degrees to the optical axis A-A of the imaging device 240 being at least substantially perpendicular to the surface of the PCBA 100. It should be noted that according to the invention the low incidence light projector 220 can be embodied also by separate light emitting units which are arranged relative to each other and to the optical axis of the imaging device 240 such that a ring-shaped light emitting arrangement is provided.

The high incidence light projector 230 comprises, in this preferred embodiment of the invention, four separate fibre-optic bundles arranged above the base element 300 and symmetrically about the optical axis A-A, with each bundle including a condenser lens at the light exit end. The position and the light exit orientation of the four separate fibre-optic bundles are selected such that the emitted light is incident, at least in the field of view inspection area 105 of the inspection apparatus 200, on the upper surface 125 of the PCBA 100 arranged on the base element 300 at an oblique angle of approximately 60 to 65 degrees to the optical axis A-A. Similarly, the low incidence light projector can be designed as a ring-shaped lighting device.

Furthermore, the low incidence light projector 220 and/or the high incidence light projector may be designed according to the invention so as to illuminate the PCBA 100 from one oblique direction or from singular oblique directions only.

The three light projecting devices 210, 220, and 230 each project coloured light having a characteristic band of frequencies in the visible frequency spectrum, such that each frequency band is centred on a different frequency of visible light. The three centre frequencies may, for example, be red, green, and blue. Although in the present embodiment the bands of frequencies do not overlap, an alternative embodiment may include bands of visible frequencies which do have some overlap. Light is projected by the three light projecting devices towards the field of view inspection area 105 on the PCBA 100.

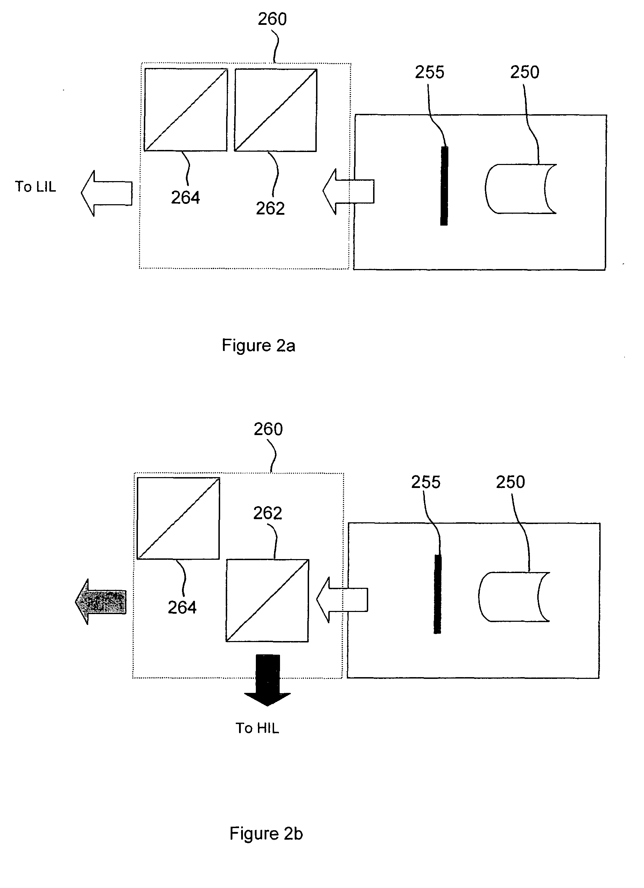

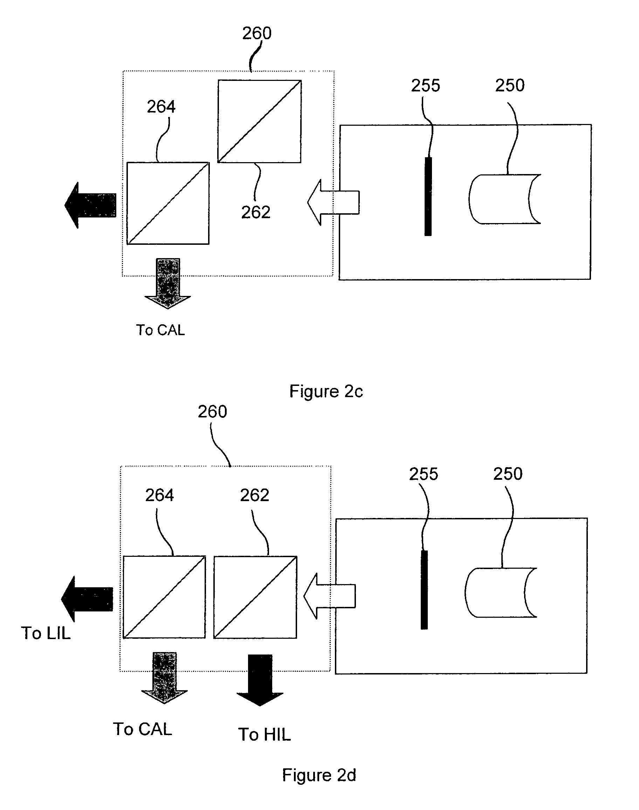

Referring also to Figure 2a to 2d, the three different colours of light for the light projecting devices 210, 220, and 230 are supplied from a single high-intensity white light source 250, such as a metal halide lamp, of the inspection apparatus 200, wherein the white light source 250 is characterised by a relatively flat spectrum across the visible frequency spectrum. The white light source 250 is filtered by an infra-red (IR) cut filter 255 to suppress the infra-red frequency content and prevent heat from the light source from being transmitted to the PCBA 100 arranged on the base element 300.

The inspection apparatus 200 further comprises a colour beam splitter assembly 260 that is positioned after the IR cut filter 255. The colour beam splitter assembly 260 is capable of splitting red, green and blue light from the white light source 250. The colour beam splitter assembly 260 comprises two separate colour beam splitters arranged in series. The first encountered colour beam splitter, a red colour beam splitter 262, reflects red light while allowing other non-red frequencies to pass through. White light entering the red colour beam splitter 262 is thus split into two colour channels: red and cyan (a combination of blue and green). The second encountered colour beam splitter; a green colour beam splitter 264 reflects green light while transmitting non-green frequencies. Cyan light passing through the red colour beam splitter 262 and entering the green colour beam splitter 264 will be split into blue and green light. The red colour beam splitter 262 and the green colour beam splitter 264 used in cascade will split white light into three channels having frequency bands with minimal frequency overlap. The colour beam splitters may be selected such that they have similar bandpass property with that of the colour separation optics of the colour video camera 242.

Activation means such as a solenoid is used with each of the colour beam splitters 262 and 264 to enable the beam splitters to move in and out of the main light path. When a colour beam splitter is positioned outside the main light path, the specific colour illumination channel is turned off. When both colour beam splitters are positioned outside the main light path, only white light will be delivered.

As mentioned, the white light source supplies the three light projecting devices 210, 220, and 230 with light of different colours. All the three colour light channels are delivered to the appropriate light projecting devices 210, 220, and 230 by fibre optic bundles connected to the colour beam splitter assembly 260. In the present embodiment of the invention the green light is guided to the co-axial light projector 210; red to the high incidence light projector 220 and blue to the low incidence light projector 230 respectively.

In an alternative embodiment, however, each of the three light projecting devices 210, 220, and 230 may include a dedicated colour light source such as blue, green and yellow respectively.

The benefits of using co-axial lighting as proposed by the invention will now be explained by way of example.

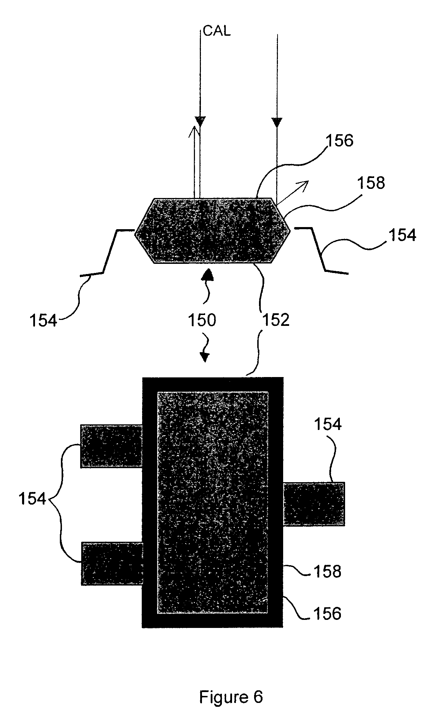

A first example is the use of co-axial lighting in the inspection of small outlined components such as small outlined transistor packages (SOT) known by the package codes SOT-23, SC70 and SC90 for example. Figure 6 shows a typical SOT 150 which is a miniature molded package 152 with gull-wing solderable leads 154. Without the aid of special illumination according to the invention, it is extremely difficult to differentiate SOT components from the printed circuit board background due to size and colour of the component. As a result, misalignment and solder defects are difficult to detect.

The use of co-axial lighting creates a bright image of flat and smooth surfaces which are largely perpendicular to the optical axis of the inspection apparatus 200, and a dark image of non-flat (rough) surfaces and/or surfaces which are not largely perpendicular to the optical axis of the inspection apparatus 200. A typical SOT package has a flat upper package surface 156 with a chamfered boundary 158. The flat package surface 156 will be highly reflective in the direction of the imaging device 240 (see Figure 1) due to the surface being substantially perpendicular to the incident co-axial lighting. In contrast, the chamfered boundary surface 158 will tend to reflect co-axial light in an oblique direction relative to the optical axis A-A of the imaging device 240 resulting in the boundary surface being relatively less reflective in the direction of the imaging device 240. Accordingly, the flat package surface 156 will appear bright to the imaging device 240 while the boundary surface will appear dark. The background circuit board 120 will also appear brighter than the chamfered boundary 41 as the PCBA 100 is arranged on and supported by the base element 300 such that the in general flat upper surface 125 of the circuit board is perpendicular to the co-axial lighting. In other words, an image of a distinct rectangle dark boundary will be acquired under co-axial lighting 11 illumination of the SOT 150.

The image processor 270 may execute algorithms for detecting the distinct dark rectangle boundary which make use of predefined package dimensions of a particular SOT component. A reference template about the size and shape of the component can be generated. In order to detect rotational misalignment, a database consisting of pre-rotated templates can be created and pre-stored. A pattern matching algorithm such as cross-correlation can be used to determine the location and rotational angle of a component. Once the location and rotational angle of the SOT component has been found, other algorithms for detecting different defects can be applied accordingly

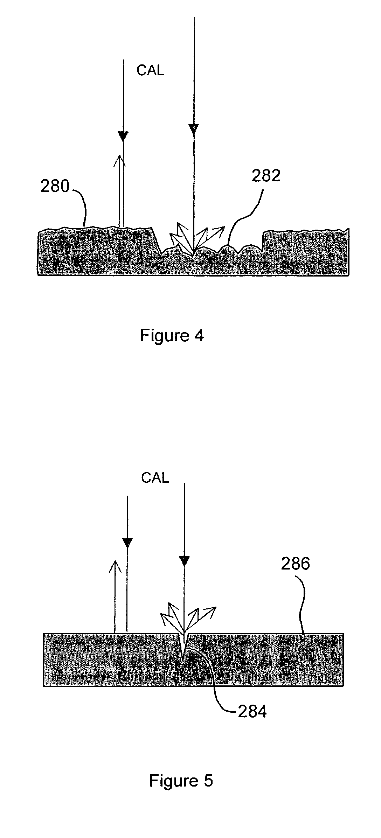

A second example that indicates the advantage of using co-axial lighting according to the invention is the improvement in detecting laser markings on a component. Laser markings generally have much poorer visual contrast than ink markings. Laser markings are created by a laser burning action that roughens the surface according to the laser beam pattern. The surface that has been burnt by the laser beam will be rougher and deeper than the original surface of the component. A rough surface will scatter more light than a smooth surface. A smooth surface reflects light very strongly in the direction opposite to the incidence light. Referring to Figure 4, in the case of co-axial lighting, the light striking on a smooth horizontal surface 280 will be reflected largely back to the camera 242 (see Figure 1) and hence appear bright. The laser marked surface 282 which is rough will scatter light and hence only a small portion of the incidence light will be reflected back to the camera 242. Under co-axial lighting, the laser marking 282 appears dark while the unmarked surface 280 appears bright. The visual contrast depends on the relative roughness of the marked 280 and unmarked 282 surfaces. Since different features of a component such as the part number, value, orientation, polarity etc., can be encoded in the component package by laser markings, the ability to acquire high-contrast images of laser markings as provided by the invention is important to achieve highly reliable PCBA inspection. Therefore, through the verification and reading of the laser marking, the correct part number, value, orientation, and other useful feature/ information of a component can be inspected and verified by the inspection apparatus 200 according to the invention.

A third example on using co-axial lighting is to highlight scratches 284 on a generally flat smooth surface 286 such as a gold plated pad as illustrated in Figure 5. These pads are found on the circuit board and enable good electrical connections to be made between the circuit board and component leads. Scratches, voids and cracks are abrupt depressions on an otherwise flat surface. Similar to the laser marks, scratches, voids and cracks will either scatter or reflect light away from the colour video camera 242 and hence the acquired image will consist of strong bright background with dark patches denoting the defects. Image processing algorithms are used to detect these undesirable surface blemishes. Thresholding techniques can be used to identify the dark patches from the bright background. Blob analysis can be further applied to compute the size, diameter and other useful parameter of defective patches.

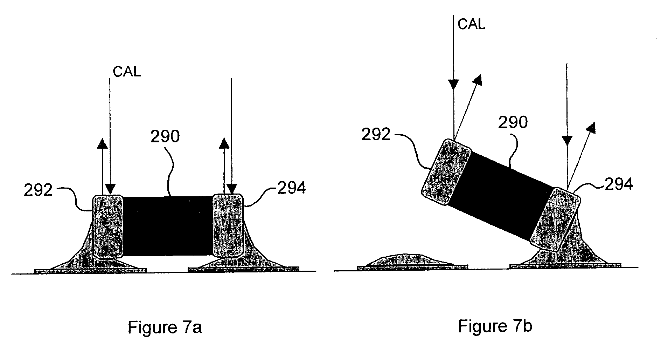

Co-axial lighting is also very effective in illuminating a tombstoned component with metal terminals, also known as electrodes. A tombstone defect generally occurs for components 290 with two terminals 292, 294 (or electrodes) as shown in Figures 7a. Tombstoning refers to a component that has one terminal 294 soldered properly to the pad while another terminal 292 is lifted away from the solder pad as shown in Figure 7b. Both terminal surfaces will be tilted relative to the plane of the circuit board and hence co-axial light will not reflected back to the camera parallel with the optical axis A-A. The image generated by the camera 242 will show the tombstoned component having both terminals appearing dark.

The co-axial light highlights a solder pad that has no solder. Under co-axial lighting, a no-solder pad will appear brighter than when it has certain amount of solder. The principle of operation is based on the realisation that a flat shiny object such as a pad will reflect most of the co-axial light back to the camera. In contrast, a solder joint will contain a wide range of surface orientations that are not all perpendicular to the optical axis A-A of the camera. These surfaces will reflect incident light away and hence appear dark in the image.

Detection of solder joint defects using co-axial lighting in combination with high incidence lighting and low incidence lighting as proposed by the preferred embodiment of the invention will now be described.

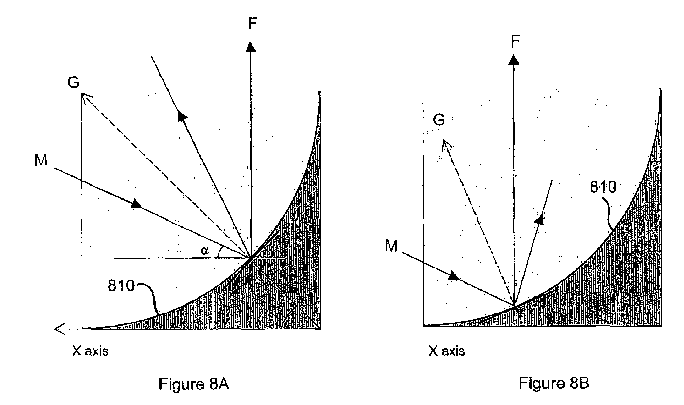

Figures 8a and 8b illustrate the relationship between the geometry of the solder joint and the incident and reflected light. It is assumed that the solder joint surface 810 behaves like a perfect mirror where all light is reflected according to the recognised principles of reflection. The viewing direction F, which is in the direction of the imaging device 240 and parallel with the optical axis A-A, is perpendicular to the upper surface 125 of the circuit board represented by the x-axis in Figure 8. The irradiant $(I_r)$ in the viewing direction F of a single light ray M incident on the solder joint surface 810 can be approximated by:

$$I_r = I_i \, k \cos (90 - 2\theta + \alpha)$$

where k is the albedo of the surface, $I_i$ is the intensity of the incident light, $\theta$ is the angle between the surface normal G and the x-axis, and $\alpha$ is the lighting angle relative to the x-axis. Maximum light is reflected in the direction of the colour video camera 242 when the cosine term equals one, or $(90 - 2\theta + \alpha) = 0$. In which case, $\theta = (90+\alpha)/2$.

The preferred embodiment of the present invention uses high incidence lighting with $90-\alpha$ equal to approximately 49 degrees and low incidence lighting with $90-\alpha$ equal to approximately 17 degrees. Thus, the maximum reflection of high incidence lighting and low incidence lighting will occur at surface orientations $\theta$ of 65.5 degrees and 81.5 degrees respectively.

The combination of the three different lighting projectors 210, 220 and 230 can be further used to produce images with different characteristics for different solder joint defects. The detection of whether a component has sufficient solder can be derived from the reflection of the high-incidence light, low-incidence light and optionally co-axial light. High incidence lighting and low incidence lighting lights have different maximum reflection into the camera at different surface orientations.

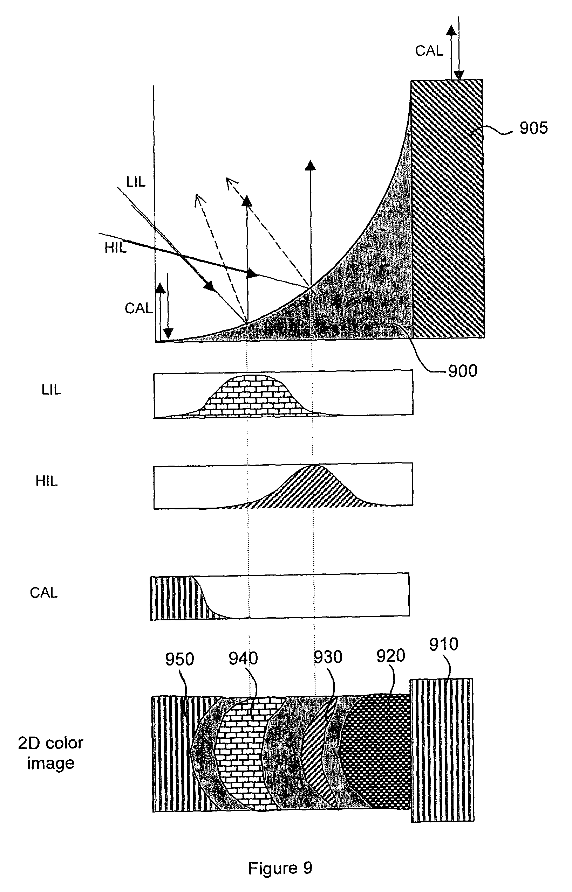

Figure 9 shows a side profile view of an ideal solder joint 900 and the edge of a terminal or lead 905 of a component 110. The solder joint has a uniform concave shape witch indicates that the solder is properly wetted to provide a good electrical connection between the lead and the circuit board. The three graphs below show the intensity of low-incidence light, high-incidence light and co-axial light reflected from the solder joint in the imaging direction. The bottom view represents a two-dimensional colour image of the solder joint and lead 905 produced by the camera 242 of Figure 1. The lead 905 will normally reflect coaxial light at a high intensity back to the camera 242 and hence a bright region 910 is shown on the image having a colour corresponding to the colour of the co-axial light. To the left of the region 910 of the image corresponding to the lead 905, there is a dark region 920 which corresponds to the steep part of the solder joint where minimal light can be reflected to the camera from any of the light sources. Moving further away from the lead 905, the solder joint levels out until the surface orientation favours reflection of the high incidence light towards the imaging device 240 whereby the camera will generate a bright region 930 in the image corresponding to the colour of the high incidence light. As the solder joint levels out further, the surface orientation will begin to favour reflection of the low incidence light towards the imaging device 240 whereby the camera will generate a bright region 940 in the image corresponding to the colour of the low incidence light. If the solder joint levels out to an almost horizontal orientation then the camera will generate a region 950 in the image corresponding to the colour of the co-axial light.

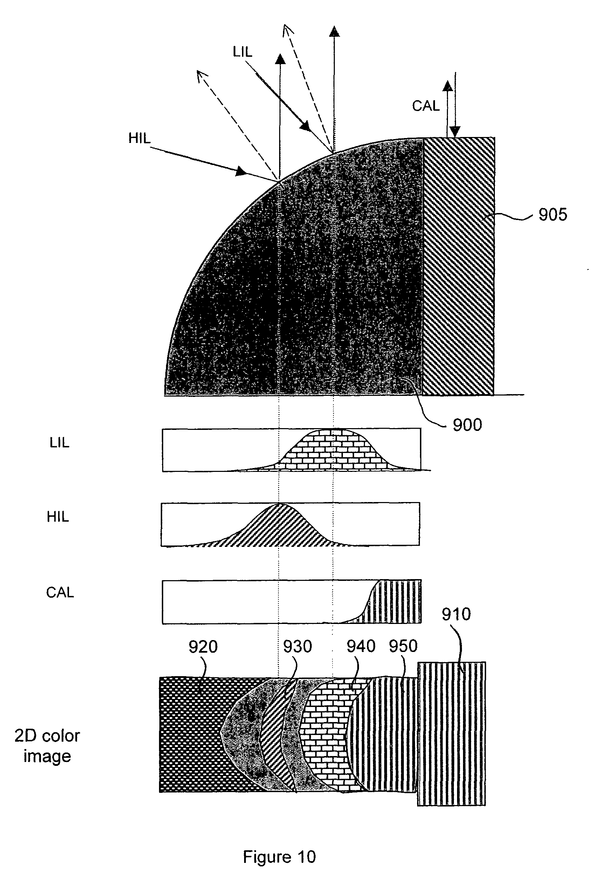

Figure 10 shows a solder joint with excessive solder whereby the profile of the solder has changed from a concave to a convex shape. As a result of this change in shape, the orientation of the reflective surface of the solder no longer becomes shallower at increasing distances from the lead 905. Instead, the reflective surface is almost horizontal next to the lead 905 and becomes increasingly steep as a function of the distance from the lead 905. In contrast, the orientation of the lead surface is unaffected by the change in shape of the solder joint. Accordingly, there is still a bright region 910 in the image generated by the camera 242 corresponding to co-axial light being reflected from the upper surface of the lead 905. However, the order of the regions 920, 930, 940, 950 corresponding to light reflected from the solder joint is reversed. Therefore, by analysing the order of the maximum positions of these three different lightings, excessive solder can be detected.

In an alternative method, it is possible to ignore the co-axial lighting reflection and just determine the relative position of the high incidence lighting and low incidence lighting reflections. However, the co-axial light is still beneficial in determining the position of the lead 905 and accordingly the position of the component 110 relative to the solder joint to establish which order of the coloured regions 930 and 940 represents a good solder joint. In further examples given below, this benefit of determining how the solder joint is positioned relative to the component is also applicable.

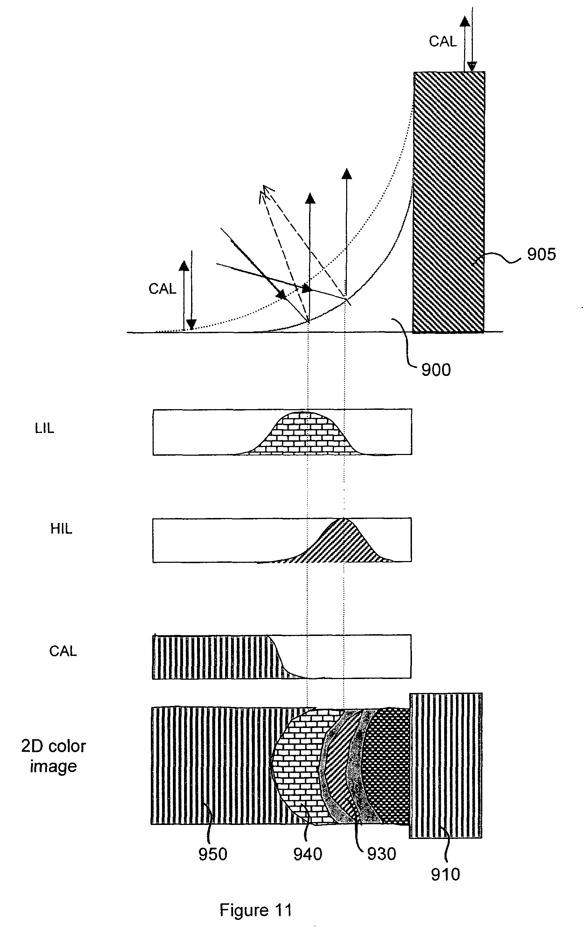

Insufficient solder refers to the situation where the amount of solder binding the terminal with the pad is less than that of a good solder joint. Insufficient solder can still be properly wetted and form a concave curved surface as illustrated in Figure 11. The bright regions 930, 940 in the image corresponding to reflection of high incidence light and low incidence light are shifted closer to the terminal or lead region 910 as compared to the ideal solder joint shown in Figure 9. This example illustrates how the region 910 corresponding to the position of the lead 905 can act as a reference point from which the position of the coloured regions 930 and 940 may be measured to determine the quality of the solder joint. In an alternative embodiment, the position of the edge of the component may be used as an accurate reference point from which the positions of the coloured regions 930 and 940 can be measured. Prior art devices typically determine the position of the solder joints purely on the basis of prestored position values that lack accuracy compared with the present technique.

If a component is not mis-aligned, then the no-solder pad area will be larger and hence the co-axial lighting reflection region 950 will be large as well. The degree of insufficient solder can be determined from the position of the low incidence lighting region 940 from the terminal region 910.

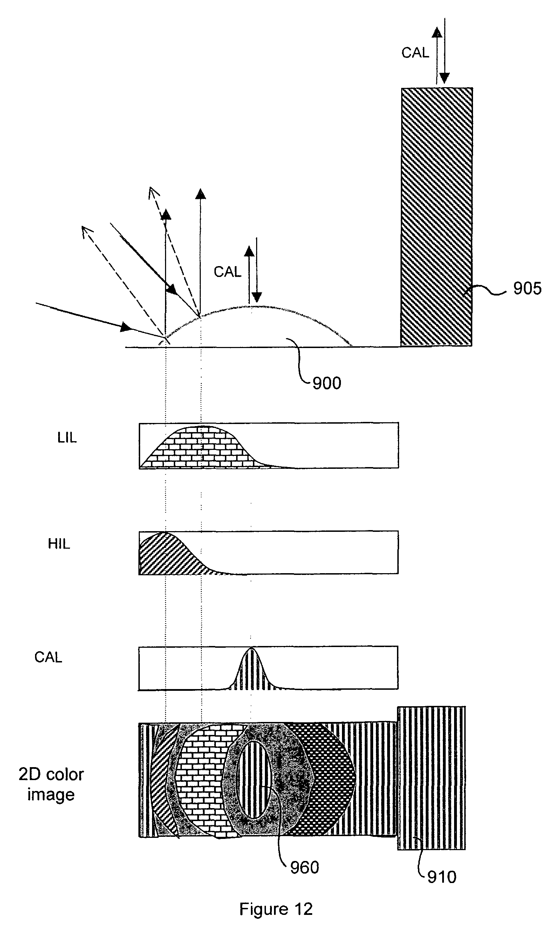

A de-wetted or negative solder joint refers to a solder joint where the solder does not adhere to the terminal or lead. A dome shape profile is generated by the solder on the solder pad instead of an arc shape solder joint profile found in wetted solder joints, as shown in Figure 12. The maximum reflection of co-axial lighting will be located approximately at the centre of the solder dome. The spread of the co-axial lighting region 960 will represent the curvature of the de-wetted solder dome. The high incidence light, low incidence light, and dark regions in the image generated by the camera further characterise the image as corresponding to a de-wetted solder joint.

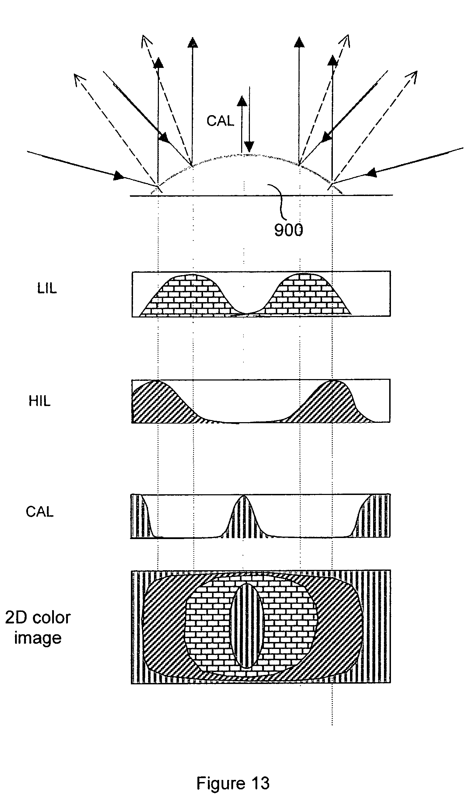

When there is no component on a pad deposited with solder, there is no component to block out light coming from all directions. Hence, light incident on the resultant solder dome from all different sides will be reflected to the imaging device at appropriate surface orientations as shown in Figure 13. The maximum co-axial lighting reflection will occur at the centre of the dome with concentric ring regions of high incidence light and low incidence light being generated in the image.

As described with reference to the above examples, based on the image produced by the inspection apparatus 200, a variety of the features of the PCBA 100, in particular the quality and possible defects of solder joints as well as different features including the placement of components 110 arranged on the PCBA 100 can be accurately detected by the inspection apparatus according to the invention.

Although this disclosure describes illustrative embodiments of the invention in detail, it is to be understood that the invention is not limited to the precise embodiments described, and that various modifications may be practiced within the scope of the invention.

**Claims**

1. An apparatus for inspecting a printed circuit board assembly, the assembly including a component mounted on a circuit board by at least one soldered portion, comprising:

   imaging means for imaging along an optical axis so as to receive light reflected from surfaces of the assembly which surfaces are within the field of view of the imaging means,

coaxial light projecting means for projecting light onto the surfaces of the assembly in a direction parallel, including coaxial, with the optical axis of the imaging means, and

oblique light projecting means for projecting light onto the surfaces of the assembly in an oblique direction relative to the optical axis of the imaging means.

2. An apparatus as claimed in claim 1, further comprising processing means for processing images received from the imaging means to determine the shape of the soldered portion based on light projected from the oblique light projecting means and reflected from the surfaces of the soldered portion, and to determine the position of the component on the circuit board based on light projected from the coaxial light projecting means and reflected from the surfaces of the component.

3. An apparatus as claimed in claim 1 or claim 2, wherein the coaxial light projecting means includes a reflector disposed along the optical axis between the circuit board and the imaging means so as to reflect light from a light source in a direction at least substantially parallel with the optical axis of the imaging means.

4. An apparatus as claimed in claim 3, wherein light reflected from the surfaces of the assembly passes through the reflector for imaging by the imaging means.

5. An apparatus as claimed in claim 3 or claim 4, wherein the oblique light projecting means include a low-incidence light source disposed so as to project light at a first angle relative to the optical axis of the imaging means, and a high-incidence light source disposed so as to project light at a second angle larger than the first angle relative to the optical axis of the imaging means.

6. An apparatus as claimed in claim 5, wherein the first angle is an angle in the range of about 17 to about 38 degrees relative to the optical axis of the imaging means, and the second angle is an angle in the range of about 39 to about 56 degrees relative to the optical axis of the imaging means.

7. An apparatus as claimed in any one of the preceding claims, wherein the imaging means is adapted to generate image information for discriminating between light from the coaxial light projecting means and light from the oblique light projecting means.

8. An apparatus as claimed in claim 7, wherein the co-axial light projecting means and the oblique light projecting means project light of different colours, and the imaging means is adapted to generate colour image information for discriminating between the light from the coaxial light projecting means and light from the oblique light projecting means.

9. An apparatus as claimed in claim 8, wherein the imaging means includes a colour camera which is adapted to generate colour image signals for discriminating between light from the coaxial light projecting means and light from the oblique light projecting means.

10. An apparatus as claimed in claim 9, further comprising a base element for supporting the printed circuit board assembly, wherein the colour camera is located generally above and in a predetermined distance from the printed circuit board assembly.

11. An apparatus as claimed in any one of the preceding claims, further comprising processing means for processing images received from the imaging means to determine the shape of the soldered portion based on light from the oblique light projecting means, and to determine the identity of the soldered portion based on light from the coaxial light projecting means.

12. A method of inspecting a printed circuit board assembly, the assembly including a component mounted on a circuit board by at least one soldered portion, comprising:

imaging along an optical axis so as to receive light reflected from surfaces of the assembly which are within the imaging field of view,

projecting light onto the surfaces of the assembly in a direction coaxial with the optical axis of the imaging means,

projecting light onto the surfaces of the assembly in an oblique direction relative to the optical axis of the imaging means, and

processing images produced in the imaging step to determine the shape of the soldered portion based on light projected from the oblique light projecting means and reflected from the surfaces of the soldered portion, and to determine the position of the component based on light projected from the coaxial light projecting means and reflected from the surfaces of the component.

Figure 1

260

255    250

264    262

To LIL

Figure 2a

260

255    250

262

264

To HIL

Figure 2b

260

264

262

255    250

To CAL

Figure 2c

260

264    262

255    250

To LIL

To CAL    To HIL

Figure 2d

Figure 3

CAL

280

282

Figure 4

CAL

286

284

Figure 5

Figure 6

Figure 7a

Figure 7b

Figure 8A

Figure 8B

Figure 9

LIL

HIL

CAL

905

900

LIL

HIL

CAL

920    930    940  950

910

2D color
image

Figure 10

CAL

905

CAL

900

LIL

HIL

CAL

2D color
image

950    940    930

910

Figure 11

Figure 12

CAL

900

LIL

HIL

CAL

2D color image

Figure 13

**European Patent Office**

# EUROPEAN SEARCH REPORT

**Application Number**

EP 01 30 0376

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1998, no. 04, 31 March 1998 (1998-03-31) & JP 09 311020 A (NEC CORP), 2 December 1997 (1997-12-02) * abstract * | 1-12 | G01N21/956 G01N21/88 G01R31/309 |
| X | EP 0 452 905 A (HITACHI LTD) 23 October 1991 (1991-10-23) * column 1; figure 3B * * column 4-5 * * column 10-11 * | 1-12 | |
| A | US 5 713 661 A (WHITE TIMOTHY PETER) 3 February 1998 (1998-02-03) * column 9-10; figure 13 * | 1-12 | |
| A | PATENT ABSTRACTS OF JAPAN vol. 014, no. 165 (P-1030), 30 March 1990 (1990-03-30) & JP 02 021244 A (MATSUSHITA ELECTRIC IND CO LTD), 24 January 1990 (1990-01-24) * abstract * | 1-12 | |
| A | US 5 187 611 A (WHITE TIMOTHY P ET AL) 16 February 1993 (1993-02-16) * column 6; figure 6 * | 1-12 | TECHNICAL FIELDS SEARCHED (Int.Cl.7) G01N G01R |
| A | US 4 421 410 A (KARASAKI KOICHI) 20 December 1983 (1983-12-20) * column 4-5; figure 6 * | 1-12 | |
| A | US 5 686 994 A (TOKURA NOBUFUMI) 11 November 1997 (1997-11-11) * column 5-7; claim 1; figures 1,2 * | 1-12 | |
| | -/-- | | |

The present search report has been drawn up for all claims

| Place of search | Date of completion of the search | Examiner |
|---|---|---|
| MUNICH | 2 May 2001 | Mason, W |

EPO FORM 1503 03.82 (P04C01)

Application Number

EP 01 30 0376

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99 20048 A (STERN HOWARD ;WHITE TIMOTHY P (US); NORTHEAST ROBOTICS LLC (US)) 22 April 1999 (1999-04-22) * page 16-20; claim 1; figures 2,3 * | 1-12 | |
| | | | **TECHNICAL FIELDS SEARCHED** (Int.Cl.7) |

The present search report has been drawn up for all claims

| Place of search | Date of completion of the search | Examiner |
|---|---|---|
| MUNICH | 2 May 2001 | Mason, W |

EPO FORM 1503 03.82 (P04C01)

**ANNEX TO THE EUROPEAN SEARCH REPORT
ON EUROPEAN PATENT APPLICATION NO.**     EP 01 30 0376

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2001

| Patent document cited in search report | | Publication date | Patent family member(s) | | Publication date |
|---|---|---|---|---|---|
| JP 09311020 | A | 02-12-1997 | NONE | | |
| EP 0452905 | A | 23-10-1991 | JP | 3072998 B | 07-08-2000 |
| | | | JP | 4001510 A | 07-01-1992 |
| | | | DE | 69107882 D | 13-04-1995 |
| | | | DE | 69107882 T | 02-11-1995 |
| | | | KR | 9500331 B | 13-01-1995 |
| | | | US | 5166985 A | 24-11-1992 |
| US 5713661 | A | 03-02-1998 | AU | 718904 B | 20-04-2000 |
| | | | AU | 7519796 A | 15-05-1997 |
| | | | EP | 0857391 A | 12-08-1998 |
| | | | WO | 9716024 A | 01-05-1997 |
| JP 02021244 | A | 24-01-1990 | JP | 2684689 B | 03-12-1997 |
| US 5187611 | A | 16-02-1993 | NONE | | |
| US 4421410 | A | 20-12-1983 | JP | 1295013 C | 26-12-1985 |
| | | | JP | 56016804 A | 18-02-1981 |
| | | | JP | 60017044 B | 30-04-1985 |
| US 5686994 | A | 11-11-1997 | JP | 7012749 A | 17-01-1995 |
| | | | CN | 1104329 A | 28-06-1995 |
| | | | KR | 141444 B | 01-07-1998 |
| WO 9920048 | A | 22-04-1999 | AU | 9315498 A | 03-05-1999 |
| | | | EP | 1044565 A | 18-10-2000 |